# FASCICULE DE BREVET EUROPEEN

(11) **EP 3 797 968 B1**
(45) Date de publication et mention de la délivrance du brevet: **02.08.2023**
(21) Numéro de dépôt: 20198248.5
(22) Date de dépôt: 24.09.2020
(51) Int. Cl.: B29C 51/10, B29C 51/36, B29C 51/08, B29C 51/26, B29C 51/30, B29C 65/74, B29C 65/00, B65B 7/16, B65B 59/00, B29C 65/02, B29C 65/78, B65B 31/02, B65B 47/02, B65B 47/04, B65B 47/08, B65B 47/10, B65B 59/04, B65B 61/06, B65B 61/14, B65B 51/14

(54) **MACHINE DE THERMOFORMAGE, D'OPERCULAGE ET DE DECOUPE DE CONTENANTS MULTIFORMAT**
VORRICHTUNG ZUM THERMOFORMEN, FOLIENVERSCHLIESSEN UND SCHNEIDEN VON BEHÄHLTERN VON UNTERSCHIEDLICHEN GRÖSSEN
THERMOFORMING, LIDDING AND CUTTING DEVICE OF CONTAINERS OF DIFFERENT FORMAT

(30) Priorité: 26.09.2019 FR 1910615
(43) Date de publication de la demande: 31.03.2021
(73) Titulaire: Guelt, 29300 Quimperle (FR)
(72) Inventeur: KERNEN, Samuel, 29300 Quimperle (FR); GUEGAN, Stéphane, 29300 Quimperle (FR)
(74) Mandataire: Novagraaf Technologies

(56) Documents cités:
- EP-A1- 2 819 831
- EP-A1- 3 241 664
- EP-A1- 3 403 808
- WO-A2-2012/154290
- DE-A1- 10 022 269

## Description

L'invention concerne le domaine des machines de conditionnement réalisant avec une même machine le thermoformage, l'operculage et la découpe de contenants.

Des entités telles que des supermarchés ou des traiteurs utilisent traditionnellement des machines d'operculage de barquettes ou des filmeuses de barquettes pour conditionner des produits, notamment alimentaires. Une machine d'operculage de barquettes permet de sceller un film d'operculage sur une barquette et son contenu. Une filmeuse de barquette permet d'emballer une barquette et son contenu avec un film d'emballage. Un exemple de machine réalisant ces opérations est divulgué dans le document EP2819831A1.

Ces machines nécessitent une gestion contraignante des barquettes préformées tant pour l'approvisionnement que pour le stockage. La gestion des barquettes est complexifiée par l'utilisation de plusieurs formats de barquettes. Ainsi, l'approvisionnement en barquettes suppose de prévoir une quantité de barquettes nécessaire pour chaque format. Le stockage des barquettes requiert un espace de stockage adapté.

La gestion contraignante des barquettes impacte de manière négative le coût d'emballage.

L'invention propose une solution visant à pallier les inconvénients précités. Un objectif de l'invention est de proposer une machine ne requérant pas d'approvisionnement en barquettes. L'invention propose une machine de thermoformage, d'operculage et de découpe multi-format.

L'invention concerne une machine de thermoformage, d'operculage et de découpe de contenants, comprenant :
- un châssis,
- un poste de thermoformage comportant :
   - des moyens de déroulement du film de thermoformage,
   - une plaque supérieure de chauffe,
   - un outillage inférieur de thermoformage comportant un moule,
   - un dispositif de plaquage du film de thermoformage dans le moule,
   - un dispositif de positionnement du poste de thermoformage;
- un poste d'operculage comportant :
   - des moyens de déroulement du film d'operculage,
   - un outillage supérieur d'operculage comportant une plaque de soudure,
   - un outillage inférieur d'operculage comportant une embase de soudure,
   - un dispositif de positionnement du poste d'operculage ;
- un poste de découpe comportant :
   - un outillage supérieur de découpe comportant une lame de découpe,
   - un outillage inférieur de découpe comportant une rainure de découpe,
   - un dispositif de positionnement du poste de découpe ;

la machine comportant au moins deux formats d'outillage pour un même premier outillage dont un premier format et un deuxième format,
et la machine comportant un module de changement de format comportant un premier état de mise en service du premier format et de mise hors service du deuxième format et un deuxième état de mise en service du deuxième format et de mise hors service du premier format.

Une telle machine n'utilise pas de barquette préformée car elle permet de réaliser des contenants de différents formats à partir d'un film de thermoformage. La machine permet en outre d'operculer et de découper le contenant réalisé après remplissage du contenant.

Le terme d'operculage est utilisé comme synonyme du terme de thermoscellage qui correspond à l'opération consistant à souder un opercule pour fermer un contenant.

Les termes « supérieur » et « inférieur » sont employés afin de positionner les outillages d'un même poste l'un par rapport à l'autre. Il est entendu que pour chaque outillage, l'homme du métier peut inverser un outillage supérieur et un outillage inférieur sans sortir du cadre de l'invention. En particulier, l'homme du métier peut renverser la machine, tous les outillages inférieurs se retrouvant alors en haut et les outillages supérieurs en bas, sans sortir du cadre de l'invention.

La machine peut comporter plusieurs modules de changement de format, chaque module de changement de format étant associé à un outillage.

La machine peut comporter un poste commun pour l'operculage et la découpe. Ceci permet d'obtenir une machine plus compacte.

Le module de changement de format peut être un barillet mobile en rotation autour d'un axe et sur lequel sont montés le premier format et le deuxième format d'outillage. L'utilisation d'un barillet comme module de changement de format permet d'obtenir une machine compacte comportant un nombre important de formats disponibles.

L'axe de rotation du barillet peut être horizontal.

Le module de changement de format peut être un chariot mobile en translation et sur lequel sont montés le premier format et le deuxième format d'outillage. Ceci permet d'obtenir une machine permettant un changement de format simple et pratique avec un surcoût limité par rapport aux machines n'ayant pas de module de changement de format.

Le premier format et le deuxième format d'outillage peuvent être mis en place sur le poste de l'outillage correspondant et le module de changement de format peut être agencé pour déplacer le dispositif de positionnement du poste de l'outillage correspondant depuis l'emplacement du premier format jusqu'à l'emplacement du deuxième format et inversement. Ceci permet d'obtenir une machine compacte comportant un nombre limité de formats disponibles.

Le module de changement de format peut être automatisé. Ceci permet un changement de format automatique.

La machine peut comporter au moins deux formats pour un même deuxième outillage et un accès au deuxième outillage, sous forme d'une trappe ou d'un tiroir, permettant le retrait d'un format en place et la mise en place d'un autre format. Ceci permet un changement de format manuel.

La machine peut comporter un dispositif de déplacement vertical du barillet. Ceci permet d'éviter que le barillet n'impacte des éléments et ne les endommage lors de sa rotation.

La machine peut comporter un système de prise en pince du film de thermoformage depuis le poste de thermoformage jusqu'au poste de découpe, le système de prise en pince ayant une configuration en tension par défaut et une configuration lâche pendant la rotation du barillet permettant une déviation temporaire du film de thermoformage à distance du barillet. Ceci permet la rotation du barillet sans endommager le film de thermoformage, le film d'operculage et le système de prise en pince.

D'autres caractéristiques et avantages de la présente invention apparaîtront plus clairement à la lecture de la description détaillée qui suit de six modes de réalisation de l'invention donnés à titre d'exemple nullement limitatif et illustrés par les dessins annexés, dans lesquels :
[Fig. 1] est une vue schématique en coupe longitudinale d'une machine selon un premier mode de réalisation de l'invention ;
[Fig. 2] est une vue schématique en coupe longitudinale d'une machine selon un deuxième mode de réalisation de l'invention ;
[Fig. 3] est une vue schématique en coupe longitudinale d'une machine selon un troisième mode de réalisation de l'invention ;
[Fig. 4] est une vue schématique en coupe longitudinale d'une machine selon un quatrième mode de réalisation de l'invention dans une première configuration ;
[Fig. 5] est une vue schématique en coupe longitudinale d'une machine selon le quatrième mode de réalisation de l'invention dans une deuxième configuration ;
[Fig. 6] est une vue schématique en coupe longitudinale d'une machine selon un cinquième mode de réalisation de l'invention ; et
[Fig. 7] est une vue schématique en coupe longitudinale d'une machine selon un sixième mode de réalisation de l'invention.

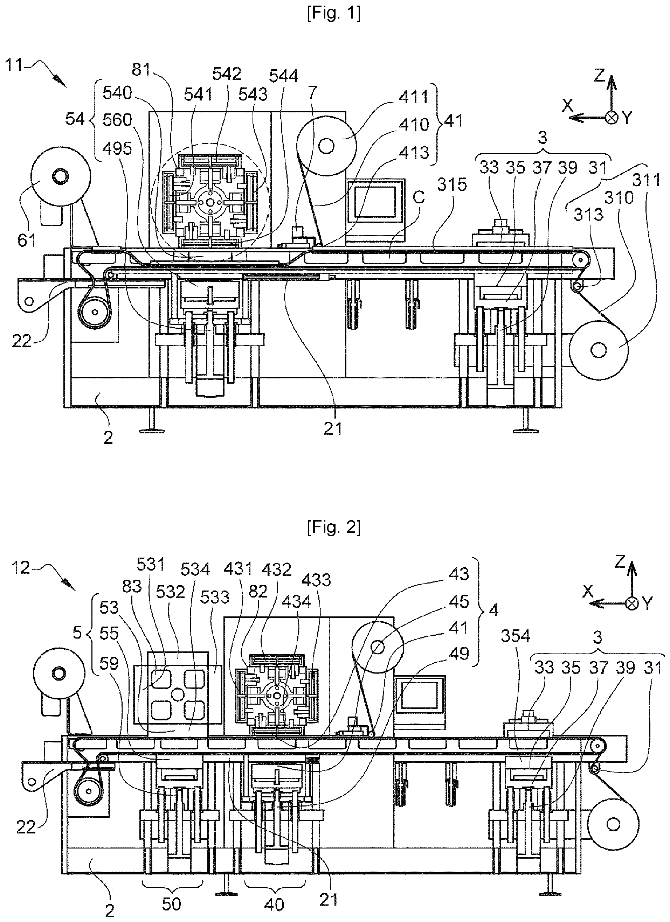

Les figures 1 à 7 sont orientées selon un repère orthonormé comprenant un axe X horizontal s'étendant selon une direction longitudinale de la machine représentée sur la figure, un axe Y horizontal s'étendant selon une direction transversale de la machine représentée sur la figure et un axe Z vertical pointant vers le haut de la machine représentée sur les figures.

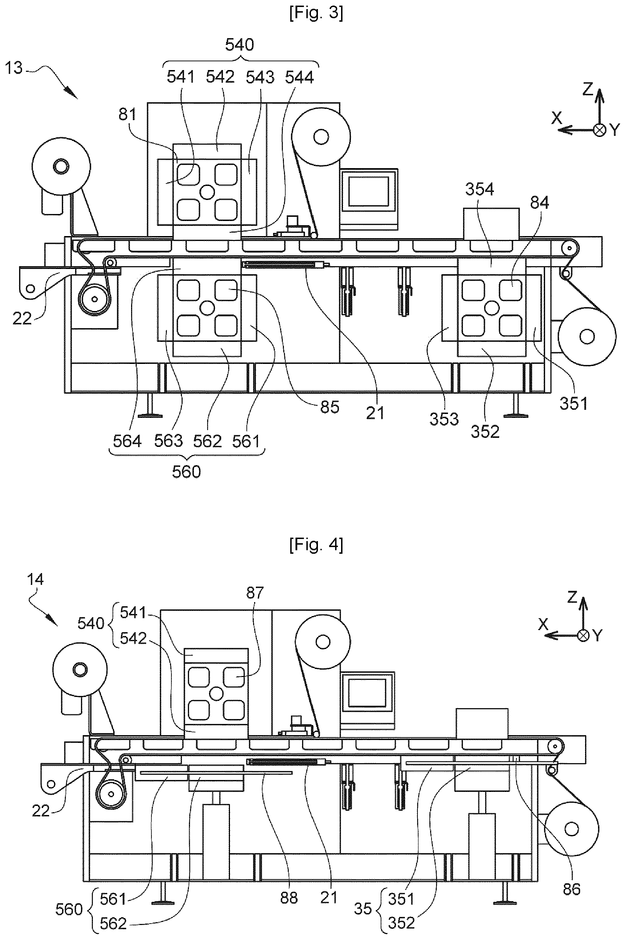

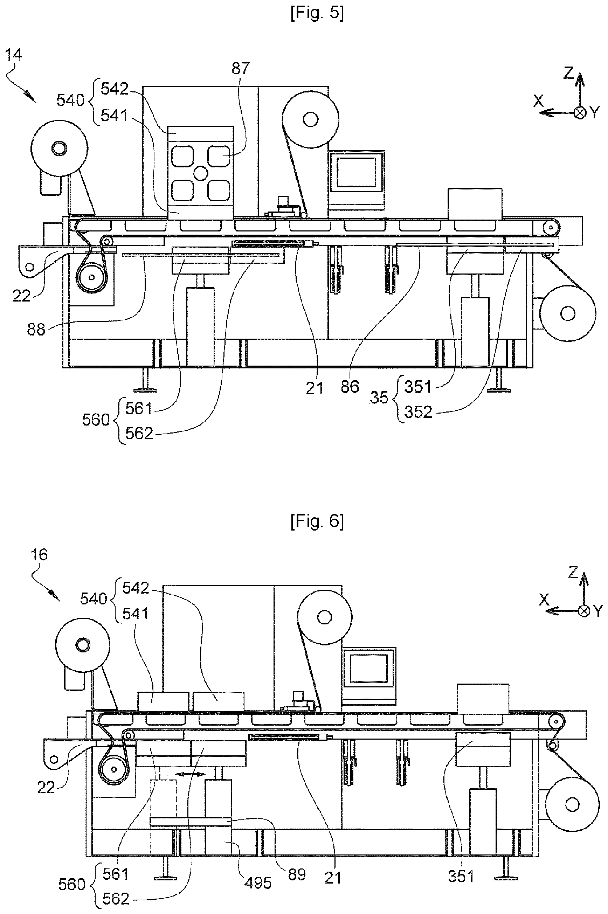

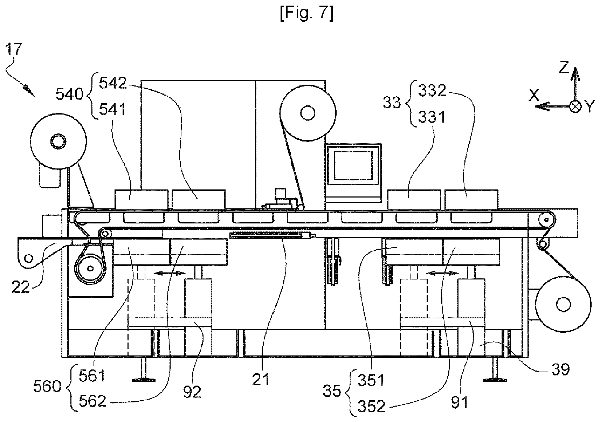

Les machines 11 à 13 représentées respectivement aux figures 1 à 3, la machine 14 représentée aux figure 4 et 5 et les machines 16 et 17 représentées respectivement aux figures 6 et 7 illustrent six modes de réalisation de l'invention.

Ci-après sont décrits les aspects communs aux six modes de réalisation de l'invention. Chaque élément commun comporte une même référence dans les figures 1 à 7.

Les machines 11 à 14 et 16 à 17 mettent en oeuvre :
- du thermoformage en formant des contenants C dans un film de thermoformage 310,
- de l'operculage, une fois les contenants C remplis, en scellant par soudure thermique un film d'operculage 410 sur les contenants C et leur contenu,
- de la découpe en découpant les contenants C selon leur contour pour les détacher du reste des films de thermoformage 310 et d'operculage 410.

Chaque machine 11 à 14 et 16 à 17 comporte un châssis 2, un poste de thermoformage 3, un poste d'operculage 4 et un poste de découpe 5.

Le poste de thermoformage 3 comporte :
- des moyens de déroulement 31 du film de thermoformage 310,
- une plaque supérieure de chauffe 33,
- un outillage inférieur de thermoformage 35 comportant un moule,
- un dispositif de plaquage 37 du film de thermoformage dans le moule,
- un dispositif de positionnement 39 du poste de thermoformage.

Les moyens de déroulement 31 du film de thermoformage 310 comportent une première bobine 311 d'où provient le film de thermoformage 310, des moyens de guidage 313 et un système de prise en pince 315. Les moyens de guidage 313 sont par exemple des rouleaux ou des tiges. La première bobine 311 et les moyens de guidage 313 ont chacun un axe selon la direction transversale Y de la machine.

En sortie de la première bobine 311, le film de thermoformage 310 est engagé sur les moyens de guidage 313 puis est saisi selon ses bords longitudinaux parallèlement à la direction longitudinale X par le système de prise en pince 315 afin d'être acheminé longitudinalement vers le poste de thermoformage 3 puis vers le poste d'operculage 4 et le poste de découpe 5. Le film de thermoformage 310, lorsqu'il est saisi dans le système de prise en pince 315 est horizontal, au moins en dehors des phases de changement de format.

Le système de prise en pince 315 comprend par exemple, pour chaque bord du film de thermoformage, une chaîne équipée de pinces. Les pinces prennent en étau un bord du film de thermoformage 310. Les chaînes forment chacune une boucle agencée autour de rouleaux pour être entraînées par un tambour motorisé le long d'un parcours fermé. Un mécanisme d'ouverture des pinces est agencé pour ouvrir les pinces au début et à la fin de la prise en pince.

La plaque supérieure de chauffe 33 s'étend dans un plan horizontal parallèle au plan (XY). La plaque supérieure de chauffe 33 est immédiatement au-dessus du film de thermoformage 310. En fonctionnement, la plaque supérieure de chauffe 33 est portée à une température adaptée pour ramollir le film de thermoformage présent dans le poste de thermoformage 3.

L'outillage inférieur de thermoformage 35 comporte un moule délimitant la forme extérieur du contenant C à former. L'intérieur du moule est en connexion fluidique avec un dispositif de plaquage 37.

Le dispositif de plaquage 37 est par exemple une pompe à vide permettant d'aspirer le film de thermoformage jusqu'à le plaquer contre les parois du moule.

En variante, le dispositif de plaquage 37 comprend un générateur de surpression débouchant dans le poste de thermoformage au-dessus du film de thermoformage. Le moule est équipé d'une sortie d'air permettant à l'air présent entre le film de thermoformage et les parois internes du moule de s'échapper. Le générateur de surpression génère une surpression permettant de plaquer le film de thermoformage contre les parois internes du moule. Selon une autre variante, le dispositif de plaquage 37 comprend un poinçon plaquant le film de thermoformage dans le moule. Les variantes concernant le dispositif de plaquage 37 peuvent être combinées entre elles.

Le dispositif de positionnement 39 du poste de thermoformage est agencé pour déplacer l'outillage inférieur de thermoformage 35 et la plaque supérieure de chauffe 33 l'un par rapport à l'autre entre une position de repos et une position de thermoformage. Dans les exemples représentés, le dispositif de positionnement 39 du poste de thermoformage est conçu pour déplacer l'outillage inférieur de thermoformage 35 verticalement.

Dans la position de repos, l'outillage inférieur de thermoformage 35 est à distance de la plaque supérieure de chauffe 33 afin de permettre la progression longitudinale du film de thermoformage 310 le long du châssis 2. Dans la position de thermoformage, l'outillage inférieur de thermoformage 35 coopère avec la plaque supérieure de chauffe 33 pour former un contenant en ramollissant le film de thermoformage 310 et en plaquant le film de thermoformage dans le moule au moyen du dispositif de plaquage 37.

Le dispositif de positionnement 39 du poste de thermoformage comprend par exemple un vérin d'axe vertical.

Les machines 11, 13, 14, 16 et 17 comportent un poste commun 54 pour l'operculage et la découpe.

En revanche, la machine 12 comporte deux postes distincts pour l'operculage et la découpe dont un poste spécifique d'operculage 40 et un poste spécifique de découpe 50.

Dans ce qui suit, le poste d'operculage 4 désigne le poste commun 54 pour l'operculage et la découpe lorsqu'il s'agit des machines 11, 13, 14, 16 et 17 ou le poste spécifique d'orperculage 40 lorsqu'il s'agit de la machine 12 ; le poste de découpe 5 désigne le poste commun 54 pour l'operculage et la découpe lorsqu'il s'agit des machines 11, 13, 14, 16 et 17 ou le poste spécifique de découpe 40 lorsqu'il s'agit de la machine 12.

Le poste d'operculage 4 comporte :
- des moyens de déroulement 41 du film d'operculage 410,
- un outillage supérieur d'operculage 43 comportant une plaque de soudure,
- un outillage inférieur d'operculage 45 comportant une embase de soudure,
- un dispositif de positionnement 49 du poste d'operculage.

Les moyens de déroulement 41 du film d'operculage 410 comportent une deuxième bobine 411 d'où provient le film d'operculage 410, et des éléments de guidage 413. Les éléments de guidage 413 sont par exemple des rouleaux ou des tiges. La deuxième bobine 411 et les éléments de guidage 413 ont chacun un axe selon la direction transversale Y de la machine. En sortie de la deuxième bobine 411, le film d'operculage 410 est engagé sur les éléments de guidage 413.

Les machines 11 à 14 et 16 à 17 comportent également un poste de soudure 7 du film de thermoformage et du film d'operculage. Le poste de soudure 7 est agencé pour souder le film d'operculage 410 sur le film de thermoformage 310 en dehors des emplacements prévus pour les contenants. La soudure du film d'operculage 410 sur le film de thermoformage 310 est par exemple réalisée le long des bords longitudinaux du film d'operculage 410.

Le film d'operculage 410 est ainsi entraîné par le film de thermoformage 310 parallèlement à la direction longitudinale X afin d'être acheminé longitudinalement vers le poste d'operculage 4 et le poste de découpe 5.

L'outillage supérieur d'operculage 43 comporte une plaque de soudure présentant une surface de soudure correspondant aux contours du format de contenants à operculer.

L'outillage inférieur d'operculage 45 comporte une embase de soudure présentant un rebord de soudure sur lequel reposent les bords du contenant C à operculer. Le rebord de soudure présente une forme correspondant aux contours du format de contenants à operculer. Le rebord de soudure délimite un espace de réception du contenant à operculer.

Le dispositif de positionnement 49 du poste d'operculage est agencé pour déplacer l'outillage inférieur d'operculage 45 et l'outillage supérieur d'operculage 43 l'un par rapport à l'autre entre une position de repos et une position d'operculage. Dans les exemples représentés, le dispositif de positionnement 49 du poste d'operculage est conçu pour déplacer l'outillage inférieur d'operculage 45 verticalement.

Dans la position de repos, l'outillage inférieur d'operculage 45 est à distance de l'outillage supérieur d'operculage 43 afin de permettre la progression longitudinale du film de thermoformage 310 et du film d'operculage 410 le long du châssis 2. Dans la position d'operculage, l'outillage inférieur d'operculage 45 coopère avec l'outillage supérieur d'operculage 43 pour sceller le film d'operculage sur un contenant par application de l'embase de soudure contre la plaque de soudure.

Le dispositif de positionnement 49 du poste d'operculage comprend par exemple un vérin d'axe vertical.

L'outillage inférieur d'operculage 45 et l'outillage supérieur d'operculage 43 peuvent être tous les deux mobiles ou uniquement l'un des deux.

Dans une variante non représentée, le poste d'operculage comporte en outre des moyens de mise sous atmosphère protectrice de l'intérieur du contenant. Ces moyens de mise sous atmosphère protectrice peuvent comprendre une pompe de mise sous vide et un injecteur de gaz protecteur.

Le poste de découpe 5 comporte :
- un outillage supérieur de découpe 53 comportant une lame de découpe,
- un outillage inférieur de découpe 55 comportant une rainure de découpe,
- un dispositif de positionnement 59 du poste de découpe.

L'outillage supérieur de découpe 53 comporte une lame de découpe s'étendant selon une ligne de découpe correspondant aux contours du format de contenants à découper.

L'outillage inférieur de découpe 55 comporte une rainure de découpe ménagée dans un support de découpe sur lequel reposent les bords du contenant C à découper. La rainure de découpe présente une forme correspondant aux contours du format de contenants à découper. Le support de découpe délimite un espace de réception du contenant à découper.

Dans le poste commun 54 pour l'operculage et la découpe, l'embase de soudure et le support de découpe peuvent être confondus. L'embrase de soudure comporte alors une rainure de découpe.

Le poste commun 54 pour l'operculage et la découpe peut comporter un outillage supérieur commun 540 pour l'outillage supérieur d'operculage 43 et l'outillage supérieur de découpe 53 et un outillage inférieur commun 560 pour l'outillage inférieur d'operculage 45 et l'outillage inférieur de découpe 55.

Le dispositif de positionnement 59 du poste de découpe est agencé pour déplacer l'outillage inférieur de découpe 55 et l'outillage supérieur de découpe 53 l'un par rapport à l'autre entre une position de repos et une position de découpe. Dans les exemples représentés, le dispositif de positionnement 59 du poste de découpe est conçu pour déplacer l'outillage inférieur de découpe verticalement.

Dans la position de repos, l'outillage inférieur de découpe 55 est à distance de l'outillage supérieur de découpe 53 afin de permettre la progression longitudinale du film de thermoformage 310 et du film d'operculage 410 le long du châssis 2. Dans la position de découpe, l'outillage inférieur de découpe 55 coopère avec l'outillage supérieur de découpe 53 pour découper le contour d'un contenant operculé par introduction de la lame de découpe dans la rainure de découpe.

Le dispositif de positionnement 59 du poste de découpe comprend par exemple un vérin d'axe vertical.

En variante, les outillages inférieurs et les outillages supérieurs peuvent être interchangés. Par exemple, la plaque de chauffe 33 peut être placée en bas et l'outillage inférieur de thermoformage 35 peut être placé en haut. Selon une autre variante, une machine peut être obtenue en retournant une machine décrite plus haut, tous les outillages inférieurs étant alors placés en haut et tous les outillages supérieurs étant alors placés en bas.

L'outillage inférieur de découpe 55 et l'outillage supérieur de découpe 53 peuvent être tous les deux mobiles ou uniquement l'un des deux.

Les films de thermoformage et d'operculage résiduels sortant du poste de découpe est récupéré à la sortie du système de prise en pince 315 sur une troisième bobine 61 entraînée positivement en rotation par un moteur.

Le poste commun 54 pour l'operculage et la découpe comporte un dispositif de positionnement commun 495 pour l'operculage et la découpe et remplissant les fonctions du dispositif de positionnement 49 du poste d'operculage et du dispositif de positionnement 59 du poste de découpe.

Chaque machine 11 à 14 et 16 à 17 comporte en outre un pousseur 21 et un convoyeur de sortie 22. Le pousseur 21 est par exemple un vérin. Dans la position de repos de l'outillage inférieur de découpe 55, l'outillage inférieur de découpe 55 a ses bords supérieurs dans le prolongement du convoyeur de sortie 22. Lorsque le contenant C est operculé et découpé, un plateau de soutien du contenant C présent dans l'outillage inférieur de découpe 55 est positionné de sorte à être affleurant aux bords supérieurs de l'outillage inférieur de découpe 55. Le contenant C une fois découpé tombe sur le plateau de soutien puis est poussé par le pousseur 21 sur le convoyeur de sortie 22.

La machine 11 de la figure 1 est multi-format et permet de réaliser quatre formats de contenants.

Chaque outillage parmi l'outillage inférieur de thermoformage 35, l'outillage supérieur commun 540, l'outillage inférieur commun 560 comporte quatre formats d'outillage.

L'outillage inférieur de thermoformage 35 et l'outillage inférieur commun 560 ont un changement de format manuel.

La machine 11 de la figure 1 comporte un accès à chaque outillage parmi l'outillage inférieur de thermoformage 35 et l'outillage inférieur commun 560 sous forme d'une trappe ou d'un tiroir, permettant le retrait d'un format en place et la mise en place d'un autre format.

L'outillage supérieur commun 540 a un changement de format automatique.

La machine 11 de la figure 1 comporte un module de changement de format supérieur 81 comportant quatre états, chaque état permettant la mise en service du format et de mise hors service des trois autres formats.

Le module de changement de format supérieur 81 de la machine 11 est un barillet monté sur le châssis 2 et mobile en rotation autour d'un axe parallèle à la direction transversale Y. Le barillet comporte 4 faces sur sa périphérie, les quatre faces comprenant une direction parallèle à la direction transversale Y.

Sur chacune des quatre faces est monté un format d'outillage pour l'outillage supérieur commun 540.

Le premier format 541 pour l'outillage supérieur commun 540 est monté sur la première face, le deuxième format 542 sur la deuxième face, le troisième format 543 sur la troisième face et le quatrième 544 format sur la quatrième face.

Dans le premier état du barillet, la première face est placée en regard du contenant C à operculer et à découper. Dans le deuxième état du barillet, la deuxième face est placée en regard du contenant à operculer et à découper. Dans le troisième état du barillet, la troisième face est placée en regard du contenant à operculer et à découper. Dans le quatrième état du barillet, la quatrième face est placée en regard du contenant à operculer et à découper. Le passage d'un état à un autre est obtenu par rotation du barillet autour de son axe.

La rotation du barillet est motorisée ce qui permet un changement de format automatique.

La machine 12 de la figure 2 est similaire à la machine 11 de la figure 1 mais comporte deux postes distincts pour l'operculage et la découpe dont un poste spécifique d'operculage 40 et un poste spécifique de découpe 50.

La machine 12 comporte deux modules de changement de format dont un premier module de changement de format 82 dédié au poste d'operculage et un deuxième module de changement de format 83 dédié au poste de découpe.

Chaque module de changement de format 82, 83 est un barillet monté sur le châssis 2 et mobile en rotation autour d'un axe parallèle à la direction transversale Y. Chaque barillet comporte 4 faces sur sa périphérie, les quatre faces comprenant une direction parallèle à la direction transversale Y.

Sur chacune des quatre faces du barillet correspondant au premier module de changement de format 82 est monté un format d'outillage pour l'outillage supérieur d'operculage 43.

Sur chacune des quatre faces du barillet correspondant au deuxième module de changement de format 83 est monté un format d'outillage pour l'outillage supérieur de découpe 53.

Parmi les quatre formats d'outillage supérieur d'operculage 43, un premier format 431 est monté sur la première face du barillet correspondant au premier module de changement de format 82, un deuxième format 432 sur la deuxième face, un troisième format 433 sur la troisième face et un quatrième format 434 sur la quatrième face.

De même, parmi les quatre formats d'outillage supérieur de découpe 53, un premier format 531 est monté sur la première face du barillet correspondant au deuxième module de changement de format 83, un deuxième format 532 sur la deuxième face, un troisième format 533 sur la troisième face et un quatrième format 534 sur la quatrième face.

De manière analogue à ce qui a été décrit pour la machine 11, la rotation de chacun des deux barillets permet un changement de format de l'outillage présent sur le barillet.

La rotation de chacun des deux barillets est motorisée ce qui permet un changement de format automatique.

L'outillage inférieur de thermoformage 35, l'outillage inférieur d'operculage 45 et l'outillage inférieur de découpe 55 ont un changement de format manuel.

Dans l'exemple représenté, les formats d'outillages en service sont un quatrième format d'outillage inférieur de thermoformage 354, le quatrième format d'outillage supérieur d'operculage 434, le quatrième format d'outillage inférieur d'operculage 454, le quatrième format d'outillage supérieur de découpe 534 et le quatrième format d'outillage inférieur de découpe 554.

La machine 13 de la figure 3 a un changement de format tout automatisé. La machine 13 permet de réaliser quatre formats de contenants.

La machine 13 comporte trois modules de changement de format dont un module de changement de format supérieur 81 identique à celui de la machine 11 et dédié à l'outillage supérieur commun 540, un premier module de changement de format inférieur 84 dédié à l'outillage inférieur de thermoformage et un deuxième module de changement de format inférieur 85 dédié à l'outillage inférieur commun 560.

Chaque module de changement de format 81, 84, 85 est un barillet monté sur le châssis 2 et mobile en rotation autour d'un axe parallèle à la direction transversale Y. Chaque barillet comporte 4 faces sur sa périphérie, les quatre faces comprenant une direction parallèle à la direction transversale Y.

Sur chacune des quatre faces du barillet du module de changement de format supérieur 81 est monté un format d'outillage pour l'outillage supérieur commun 540.

Parmi les quatre formats de l'outillage supérieur commun 540, un premier format 541 est monté sur la première face du barillet correspondant au module de changement de format supérieur 81, un deuxième format 542 sur la deuxième face, un troisième format 543 sur la troisième face et un quatrième format 544 sur la quatrième face.

Sur chacune des quatre faces du barillet du premier module de changement de format inférieur 84 est monté un format d'outillage pour l'outillage inférieur de thermoformage 35.

Parmi les quatre formats d'outillage inférieur de thermoformage 35, un premier format 351 est monté sur la première face du barillet correspondant au premier module de changement de format inférieur 84, un deuxième format 352 sur la deuxième face, un troisième format 353 sur la troisième face et un quatrième format 354 sur la quatrième face.

Sur chacune des quatre faces du barillet du deuxième module de changement de format inférieur 85 est monté un format d'outillage pour l'outillage inférieur commun 560.

Parmi les quatre formats de l'outillage inférieur commun 560, un premier format 561 est monté sur la première face du barillet correspondant au module de changement de format supérieur 81, un deuxième format 562 sur la deuxième face, un troisième format 563 sur la troisième face et un quatrième format 564 sur la quatrième face.

De manière analogue à ce qui a été décrit pour la machine 11, la rotation de chacun des trois barillets permet un changement de format de l'outillage présent sur le barillet.

La rotation de chacun des trois barillets est motorisée ce qui permet un changement de format automatique.

La machine 14 de la figure 4 a également un changement de format tout automatisé.

La machine 14 permet de réaliser deux formats de contenants.

Chaque outillage parmi l'outillage inférieur de thermoformage 35, l'outillage supérieur commun 540, et l'outillage inférieur commun 560 comporte deux formats d'outillage.

La machine 14 comporte trois modules de changement de format dont un premier module de changement de format binaire 86 dédié à l'outillage inférieur de thermoformage 35, un deuxième module de changement de format binaire 87 dédié à l'outillage supérieur commun 540 et un troisième module de changement de format binaire 88 dédié à l'outillage inférieur commun 560.

Le premier module de changement de format binaire 86 est un premier chariot mobile en translation sur lequel sont montés le premier format 351 et le deuxième format 352 de l'outillage inférieur de thermoformage 35. Le premier chariot est monté sur des rails montés sur le châssis 2 et s'étendant dans la direction longitudinale X.

Le deuxième module de changement de format binaire 87 est un barillet monté sur le châssis 2 et mobile en rotation autour d'un axe parallèle à la direction transversale Y. Le barillet comporte 4 faces sur sa périphérie, les quatre faces comprenant une direction parallèle à la direction transversale Y. Seulement deux des faces sont équipées d'un format de l'outillage supérieur commun 540.

Parmi les deux formats de l'outillage supérieur commun 540, un premier format 541 est monté sur une première face du barillet du module de changement de format supérieur 81 et un deuxième format 542 est monté sur une face opposée à la première face.

Le troisième module de changement de format binaire 88 est un deuxième chariot mobile en translation et sur lequel sont montés le premier format 361 et le deuxième format 362 de l'outillage inférieur commun 560. Le deuxième chariot est monté sur des rails montés sur le châssis 2 et s'étendant dans la direction longitudinale X.

La translation de chacun des chariots permet un changement de format de l'outillage présent sur le chariot.

La rotation du barillet permet un changement de format de l'outillage présent sur le barillet.

La translation des chariots et la rotation du barillet sont motorisées ce qui permet un changement de format automatique.

La figure 4 représente la machine 14 dans une première configuration permettant de réaliser un premier format de contenant. La figure 5 représente la machine 14 dans une deuxième configuration permettant de réaliser un deuxième format de contenant. Pour passer de la première configuration à la deuxième configuration, chacun des chariots a été translaté longitudinalement vers l'aval c'est-à-dire vers la gauche des figures et le barillet a effectué une rotation de π radians autour de son axe. Le dispositif de positionnement commun 495 pour l'operculage et la découpe n'est pas déplaçable horizontalement.

La machine 16 permet de réaliser deux formats de contenants.

Chaque outillage parmi l'outillage inférieur de thermoformage 35, l'outillage supérieur commun 540, et l'outillage inférieur commun 560 comporte deux formats d'outillage.

La machine 16 comporte un module de changement de format unique 89 dédié au poste commun 54 pour l'operculage et la découpe.

Un premier format 541 et un deuxième format 542 de l'outillage supérieur commun 540 sont mis en place sur le poste commun 54 pour l'operculage et la découpe. Le premier format 541 et le deuxième format 542 de l'outillage supérieur commun 540 sont juxtaposés selon la direction longitudinale X et en vis-à-vis de contenants C déjà formés.

Le module de changement de format unique 89 est agencé pour déplacer le dispositif de positionnement commun 495 pour l'operculage et la découpe depuis l'emplacement du premier format jusqu'à l'emplacement du deuxième format de l'outillage supérieur commun 560 et inversement.

Le module de changement de format unique 89 est par exemple un vérin ou une crémaillère.

L'outillage inférieur commun 560 est monté directement sur le dispositif de positionnement commun 495 pour l'operculage et la découpe. La machine 16 comporte un accès à l'outillage inférieur commun 560 sous forme d'une trappe ou d'un tiroir, permettant le retrait d'un premier format 561 en place et la mise en place d'un deuxième format 562.

Comme pour la machine 11, l'outillage inférieur de thermoformage 35 a un changement de format manuel.

La machine 17 permet de réaliser deux formats de contenants.

Chaque outillage parmi l'outillage inférieur de thermoformage 35, l'outillage supérieur commun 540, et l'outillage inférieur commun 560 comporte deux formats d'outillage.

La machine 17 comporte un premier module de changement de format 91 dédié au poste de thermoformage 3 et un deuxième module de changement de format 92 dédié au poste commun 54 pour l'operculage et la découpe.

Une première plaque supérieure de chauffe 331 et une deuxième plaque supérieure de chauffe 332 sont mises en place sur le poste de thermoformage 3. La première plaque supérieure de chauffe 331 et la deuxième plaque supérieure de chauffe 332 sont juxtaposés selon la direction longitudinale X au-dessus du film de thermoformage

Un premier format 531 et un deuxième format 532 de l'outillage inférieur de thermoformage sont mis en place sur le poste de thermoformage 3. Le premier format 531 et le deuxième format 532 de l'outillage inférieur de thermoformage 3 sont juxtaposés selon la direction longitudinale X sous le film de thermoformage en vis-à-vis respectivement de la première plaque supérieure de chauffe 331 et la deuxième plaque supérieure de chauffe 332.

Le premier module de changement de format 91 est agencé pour déplacer le dispositif de positionnement 39 du poste de thermoformage depuis l'emplacement du premier format jusqu'à l'emplacement du deuxième format de l'outillage inférieur de thermoformage 35 et inversement.

Un premier format 541 et un deuxième format 542 de l'outillage supérieur commun 540 sont mis en place sur le poste commun 54 pour l'operculage et la découpe. Le premier format 541 et le deuxième format 542 de l'outillage supérieur commun 540 sont juxtaposés selon la direction longitudinale X et en vis-à-vis de contenants C déjà formés.

Un premier format 561 et un deuxième format 562 de l'outillage inférieur commun 560 sont mis en place sur le poste commun 54 pour l'operculage et la découpe. Le premier format 561 et le deuxième format 562 de l'outillage inférieur commun 560 sont juxtaposés selon la direction longitudinale X. Le premier format 561 de l'outillage inférieur commun 560 est placé en dessous du premier format 541 de l'outillage supérieur commun 540. De même, le deuxième format 562 de l'outillage inférieur commun 560 est placé en dessous du premier format 542 de l'outillage supérieur commun 540.

Le deuxième module de changement de format 92 est agencé pour déplacer le dispositif de positionnement commun 495 pour l'operculage et la découpe depuis l'emplacement du premier format jusqu'à l'emplacement du deuxième format de l'outillage inférieur commun 560 et inversement.

Le premier module de changement de format 91 et le deuxième module de changement de format 92 sont par exemple des vérins ou des crémaillères.

Le premier module de changement de format 91 et le deuxième module de changement de format 92 sont motorisés. La machine 17 a un changement de format tout automatisé.

En variante, les modules de changement de format peuvent être automatisés en utilisant un vérin pneumatique commandé.

Une variante de la machine 17 peut être conçue pour réaliser n formats de contenants, n étant supérieur à 2. Dans ce cas, la machine comporte n formats d'outillages juxtaposés selon la direction longitudinale X pour chacun des outillages parmi la plaque supérieure de chauffe, l'outillage inférieur de thermoformage, l'outillage supérieur commun et l'outillage inférieur commun.

Les machines comportant un barillet peuvent avoir un dispositif de déplacement vertical du barillet. Ceci permet d'éviter que le barillet n'impacte des éléments et ne les endommage dans sa rotation.

En variante ou en complément, le système de prise en pince des machines comportant un barillet peuvent avoir une configuration en tension par défaut et une configuration lâche pendant la rotation du barillet permettant une déviation temporaire du film de thermoformage à distance du barillet. Ceci permet la rotation du barillet sans endommager le film de thermoformage, le film d'operculage et le système de prise en pince 315.

## Revendications

1. Machine (11-14,16-17) de thermoformage, d'operculage et de découpe de contenants, la machine comprenant :
- un châssis (2),
- un poste de thermoformage (3) comportant :
- des moyens de déroulement (31) du film de thermoformage,
- une plaque supérieure de chauffe (33),
- un outillage inférieur de thermoformage (35) comportant un moule,
- un dispositif de plaquage (37) du film de thermoformage dans le moule,
- un dispositif de positionnement (39) du poste de thermoformage;
- un poste d'operculage (4) comportant :
- des moyens de déroulement (41) du film d'operculage,
- un outillage supérieur d'operculage (43, 540) comportant une plaque de soudure,
- un outillage inférieur d'operculage (45, 560) comportant une embase de soudure,
- un dispositif de positionnement (49, 495) du poste d'operculage ;
- un poste de découpe (5) comportant :
- un outillage supérieur de découpe (53, 540) comportant une lame de découpe,
- un outillage inférieur de découpe (55, 560) comportant une rainure de découpe,
- un dispositif de positionnement (59, 495) du poste de découpe ;
la machine (11-14,16-17) comportant au moins deux formats (351-354, 431 - 434, 531-534, 541-544, 561-564) d'outillage pour un même premier outillage (35, 43, 53, 540, 560) dont un premier format et un deuxième format,
la machine (11-14,16-17) étant **caractérisée en ce qu'**elle comporte un module de changement de format (81-89, 91-92) comportant un premier état de mise en service du premier format et de mise hors service du deuxième format et un deuxième état de mise en service du deuxième format et de mise hors service du premier format.

2. Machine (11-14,16-17) selon la revendication 1, **caractérisée en ce qu'**elle comporte plusieurs modules de changement de format (81-89, 91-92), chaque module de changement de format (81-89, 91-92) étant associé à un outillage (35, 43, 53, 540, 560).

3. Machine (11-14,16-17) selon la revendication 1 ou 2, **caractérisée en ce qu'**elle comporte un poste commun (54) pour l'operculage et la découpe.

4. Machine (11-14) selon l'une quelconque des revendications précédentes, **caractérisée en ce que** le module de changement de format (81-85, 87) est un barillet mobile en rotation autour d'un axe et sur lequel sont montés le premier format et le deuxième format d'outillage.

5. Machine (11-14) selon la revendication 4 **caractérisée en ce que** l'axe de rotation du barillet est horizontal.

6. Machine (14) selon l'une quelconque des revendications1 à 3, **caractérisée en ce que** le module de changement de format (86, 88) est un chariot mobile en translation et sur lequel sont montés le premier format et le deuxième format d'outillage.

7. Machine (16-17) selon l'une quelconque des revendications 1 à 3, **caractérisée en ce que** le premier format et le deuxième format d'outillage sont mis en place sur le poste de l'outillage (35, 540, 560) correspondant et **en ce que** le module de changement de format (89, 91, 92) est agencé pour déplacer le dispositif de positionnement (39, 495) du poste de l'outillage (35, 540, 560) correspondant depuis l'emplacement du premier format jusqu'à l'emplacement du deuxième format et inversement.

8. Machine (11-14,16-17) selon l'une quelconque des revendications précédentes **caractérisée en ce que** le module de changement de format (81-89, 91-92) est automatisé.

9. Machine (11-12, 16) selon l'une quelconque des revendications précédentes **caractérisée en ce qu'**elle comporte au moins deux formats pour un même deuxième outillage (35, 45, 55, 560) et un accès au deuxième outillage (35, 45, 55, 560), sous forme d'une trappe ou d'un tiroir, permettant le retrait d'un format en place et la mise en place d'un autre format.

10. Machine (11-14) selon la revendication 4, **caractérisée en ce qu'**elle comporte un dispositif de déplacement vertical du barillet.

11. Machine (11-14) selon la revendication 4, **caractérisée en ce qu'**elle comporte un système de prise en pince (315) du film de thermoformage (310) depuis le poste de thermoformage (3) jusqu'au poste de découpe (5), le système de prise en pince (315) ayant une configuration en tension par défaut et une configuration lâche pendant la rotation du barillet permettant une déviation temporaire du film de thermoformage (310) à distance du barillet.

## Patentansprüche

1. Maschine (11-14,16-17) zum Thermoformen, Deckeln und Schneiden von Behältern, die Maschine umfassend:
- einen Rahmen (2),
- einen Thermoformstand (3), der beinhaltet:
- Mittel (31) zum Abwickeln einer Thermoformfolie,
- eine obere Heizplatte (33),
- ein unteres Thermoformwerkzeug (35), das eine Form beinhaltet,
- eine Vorrichtung (37) zum Plattieren der Thermoformfolie in der Form,
- eine Vorrichtung (39) zum Positionieren des Thermoformstands;
- einen Deckelstand (4), der beinhaltet:
- Mittel (41) zum Abwickeln der Deckelfolie,
- ein oberes Deckelungswerkzeug (43, 540), das eine Schweißplatte beinhaltet,
- ein unteres Deckelungswerkzeug (45, 560), das einen Schweißsockel beinhaltet,
- eine Vorrichtung (49, 495) zum Positionieren des Deckelungsstands;
- einen Schneidstand (5), der beinhaltet:
- ein oberes Schneidwerkzeug (53, 540), das eine Schneidklinge beinhaltet,
- ein unteres Schneidwerkzeug (55, 560), das eine Schneidnut beinhaltet,
- eine Vorrichtung (59, 495) zum Positionieren des Schneidstands;
wobei die Maschine (11-14,16-17) mindestens zwei Werkzeugformate (351-354, 431-434, 531-534, 541-544, 561-564) für ein gleiches erstes Werkzeug (35, 43, 53, 540, 560), darunter ein erstes Format und ein zweites Format, beinhaltet,
wobei die Maschine (11-14,16-17) **dadurch gekennzeichnet ist, dass** sie ein Formatänderungsmodul (81-89, 91-92) beinhaltet, das einen ersten Zustand einer Inbetriebnahme des ersten Formats und einer Außerbetriebsetzung des zweiten Formats und einen zweiten Zustand der Inbetriebnahme des zweiten Formats und der Außerbetriebsetzung des ersten Formats beinhaltet.

2. Maschine (11 -14,16-17) nach Anspruch 1, **dadurch gekennzeichnet, dass** sie mehrere Formatänderungsmodule (81-89, 91-92) umfasst, wobei jedes Formatänderungsmodul (81-89, 91-92) einem Werkzeug (35, 43, 53, 540, 560) zugeordnet ist.

3. Maschine (11-14,16-17) nach Anspruch 1 oder 2, **dadurch gekennzeichnet, dass** sie einen gemeinsamen Stand (54) für die Deckelung und das Schneiden beinhaltet.

4. Maschine (11-14) nach einem der vorstehenden Ansprüche, **dadurch gekennzeichnet, dass** das Formatänderungsmodul (81-85, 87) eine bewegbare Trommel ist, die sich um eine Achse dreht, und an diesem das erste Format und das zweite Werkzeugformat montiert sind.

5. Maschine (11-14) nach Anspruch 4, **dadurch gekennzeichnet, dass** die Drehachse der Trommel horizontal ist.

6. Maschine (14) nach einem der Ansprüche 1 bis 3, **dadurch gekennzeichnet, dass** das Formatänderungsmodul (86, 88) ein bewegbarer Schlitten ist und auf diesem das erste Format und das zweite Werkzeugformat montiert sind.

7. Maschine (16-17) nach einem der Ansprüche 1 bis 3, **dadurch gekennzeichnet, dass** das erste Format und das zweite Werkzeugformat auf dem entsprechenden Werkzeugstand (35, 540, 560) platziert werden, und **dass** das Formatänderungsmodul (89, 91, 92) angeordnet ist, um die Vorrichtung (39, 495) zum Positionieren des entsprechenden Werkzeugstands (35, 540, 560) von dem Standort des ersten Formats bis zu dem Standort des zweiten Formats und umgekehrt zu bewegen.

8. Maschine (11-14,16-17) nach einem der vorstehenden Ansprüche, **dadurch gekennzeichnet, dass** das Formatänderungsmodul (81-89, 91-92) automatisiert ist.

9. Maschine (11-12, 16) nach einem der vorstehenden Ansprüche **dadurch gekennzeichnet, dass** sie mindestens zwei Formate für ein gleiches zweites Werkzeug (35, 45, 55, 560) und einen Zugang zu dem zweiten Werkzeug (35, 45, 55, 560) in Form einer Klappe oder einem Schubfach, die/das das Entfernen eines Formats und Einsetzen eines anderen Formats ermöglicht, beinhaltet.

10. Maschine (11-14) nach Anspruch 4, **dadurch gekennzeichnet, dass** sie eine Maschine zum vertikalen Bewegen der Trommel beinhaltet.

11. Maschine (11-14) nach Anspruch 4, **dadurch gekennzeichnet, dass** sie ein System (315) zum Ergreifen der Thermoformfolie (310) von dem Thermoformstand (3) zu dem Schneidstand (5) mit einer Klaue beinhaltet, wobei das System (315) zum Ergreifen mit einer Klaue eine Standardspannungskonfiguration und eine gelockerte Konfiguration während der Drehung der Trommel aufweist, wobei eine temporäre Abweichung der Thermoformfolie (310) in dem Abstand von der Trommel ermöglicht wird.

## Claims

1. Machine (11-14, 16-17) for thermoforming, sealing and cutting containers, the machine including:
- a frame (2),
- a thermoforming station (3) comprising:
- means (31) for unwinding the thermoforming film,
- an upper heating plate (33),
- a lower thermoforming tool (35) comprising a mold,
- a device (37) for pressing the thermoforming film into the mold,
- a positioning device (39) of the thermoforming station;
- a sealing station (4) comprising:
- means (41) for unwinding the sealing film,
- an upper sealing tool (43, 540) comprising a welding plate,
- a lower sealing tool (45, 560) comprising a welding baseplate,
- a positioning device (49, 495) of the sealing station;
- a cutting station (5) comprising:
- an upper cutting tool (53, 540) comprising a cutting blade,
- a lower cutting tool (55, 560) comprising a cutting groove,
- a positioning device (59, 495) of the cutting station;
the machine (11-14, 16-17) comprising at least two tool layouts (351-354, 431-434, 531-534, 541-544, 561-564) for the same first tool (35, 43, 53, 540, 560), including a first layout and a second layout,
the machine (11-14, 16-17) being **characterized in that** it comprises a layout change module (81-89, 91-92) comprising a first state for putting the first layout into operation and for putting the second layout out of operation and a second state for putting the second layout into operation and for putting the first layout out of operation.

2. Machine (11-14, 16-17) according to claim 1, **characterized in that** it comprises a plurality of layout change modules (81-89, 91-92), each layout change module (81-89, 91-92) being associated with one tool (35, 43, 53, 540, 560).

3. Machine (11-14, 16-17) according to claim 1 or 2, **characterized in that** it comprises a common station (54) for sealing and cutting.

4. Machine (11-14) according to any of the preceding claims, **characterized in that** the layout change module (81-85, 87) is a barrel which is rotatable about an axis and on which the first tool layout and the second tool layout are mounted.

5. Machine (11-14) according to claim 4, **characterized in that** the axis of rotation of the barrel is horizontal.

6. Machine (14) according to any of claims 1 to 3, **characterized in that** the layout change module (86, 88) is a carriage which is translatable and on which the first tool layout and the second tool layout are mounted.

7. Machine (16-17) according to any of claims 1 to 3, **characterized in that** the first tool layout and the second tool layout are set up on the station of the corresponding tool (35, 540, 560) and **in that** the layout change module (89, 91, 92) is arranged to move the positioning device (39, 495) of the station of the corresponding tool (35, 540, 560) from the location of the first layout to the location of the second layout and vice versa.

8. Machine (11-14, 16-17) according to any of the preceding claims, **characterized in that** the layout change module (81-89, 91-92) is automated.

9. Machine (11-12, 16) according to any of the preceding claims, **characterized in that** it comprises at least two layouts for the same second tool (35, 45, 55, 560) and access to the second tool (35, 45, 55, 560), in the form of a hatch or a drawer, which allows a layout that is already set up to be removed and another layout to be set up.

10. Machine (11-14) according to claim 4, **characterized in that** it comprises a device for vertically moving the barrel.

11. Machine (11-14) according to claim 4, **characterized in that** it comprises a system (315) for clamping the thermoforming film (310) from the thermoforming station (3) to the cutting station (5), the clamping system (315) having a default tensioned configuration and a slack configuration during rotation of the barrel which allows the thermoforming film (310) to temporarily deviate away from the barrel.
